# EUROPÄISCHE PATENTSCHRIFT

(11) **EP 4 101 275 B1**
(45) Veröffentlichungstag und Bekanntmachung des Hinweises auf die Patenterteilung: **07.08.2024**
(21) Anmeldenummer: 22173581.4
(22) Anmeldetag: 16.05.2022
(51) Int. Cl.: A01B 73/00

(54) **ANBAUGERÄT ZUR FELDBEARBEITUNG**
FIELD WORKING ATTACHMENT
APPAREIL ACCESSOIRE DESTINÉ AU TRAITEMENT DU SOL

(30) Priorität: 04.06.2021 DE 102021114431
(43) Veröffentlichungstag der Anmeldung: 14.12.2022
(73) Patentinhaber: Maschinenfabrik Bernard Krone GmbH & Co. KG, 48480 Spelle (DE)
(72) Erfinder: Buddendick, Michael, 48683 Ahaus (DE); Bolsmann, Martin, 49832 Andervenne (DE); Ester, Markus, 49832 Beesten (DE); Ahlmer, Frank, 49492 Westerkappeln (DE)

(56) Entgegenhaltungen:
- EP-A1- 2 656 712
- EP-A1- 3 669 626
- DE-A1- 102018 116 213
- US-A1- 2015 313 083

## Beschreibung

Die vorliegende Erfindung betrifft ein Anbaugerät zur Feldbearbeitung nach dem Oberbegriff von Anspruch 1.

In der Landwirtschaft werden zur Bearbeitung eines Feldes unterschiedliche Maschinen eingesetzt. Hierzu zählen z.B. selbstfahrende Maschinen, die einen eigenen Fahrantrieb aufweisen sowie eine integrierte Vorrichtung zur Feldbearbeitung, oder gezogene Maschinen, die keinen eigenen Fahrantrieb aufweisen, sondern von einem Traktor bzw. Schlepper gezogen werden. Außerdem existieren Vorsatz- bzw. Anbaugeräte, die für einen bestimmten Einsatz an eine Landmaschine wie einen Traktor, einen Mähdrescher oder dergleichen angekoppelt werden, wobei die Landmaschine das Anbaugerät wenigstens teilweise, normalerweise vollständig stützt bzw. trägt. D.h. das Anbaugerät ruht in der Regel im Einsatz nicht oder nur teilweise auf einem eigenen Fahrwerk.

Viele Anbaugeräte sind aufgrund ihrer Breite in angekoppeltem Zustand nicht für den Straßenverkehr zugelassen. Das Anbaugerät muss in diesem Fall abgekoppelt und auf einen eigens vorgesehenen Transportwagen geladen werden. Letzterer weist eine Deichsel auf, durch die er von einem Schlepper gezogen werden kann. Normalerweise ist das Anbaugerät auf dem Transportwagen um 90° gegenüber seiner Position bei der Feldbearbeitung gedreht, wodurch das Breitenproblem gelöst ist. Der Einsatz eines Transportwagens bringt allerdings verschiedene Nachteile mit sich. Hierzu zählen die Anschaffungskosten für einen Wagen, dem lediglich eine Hilfsfunktion zukommt. Außerdem muss der Wagen bei jedem Einsatz auf einem geeigneten Platz in Feldnähe abgestellt werden, was aufgrund der unter Umständen erheblichen Dimensionen problematisch ist. Außerdem muss das Anbaugerät bei jedem Einsatz vom Transportwagen abgeladen und nach dem Einsatz wieder auf diesen aufgeladen werden, was ein hohes Maß an Präzision erfordert und somit zeitaufwendig ist. Alternativ zum Einsatz eines Transportwagens können manche Anbaugeräte auch für die Straßenfahrt an der Landmaschine verbleiben, wobei wenigstens Teile des Anbaugeräts in eine spezielle Position geschwenkt werden müssen. Auch dies ist allerdings mit Nachteilen verbunden Das Gewicht des Anbaugeräts lastet auf der Landmaschine, so dass unter Umständen eine zusätzliche Achse notwendig ist, um die Achslast zu begrenzen. Auch ist der Schwenkmechanismus technisch aufwendig und das geschwenkte Anbaugerät schränkt das Sichtfeld des Fahrers ein, insbesondere wenn es an der Vorderseite der Landmaschine angekoppelt ist.

Aus der EP 2 322 024 A1 ist ein Transportsystem für einen Erntevorsatz einer Landmaschine bekannt, mit einem Rahmen, mit dem zwei Räder auf gegenüberliegenden Seiten verbunden sind. Bezogen auf den angekoppelten Zustand an der Landmaschine ist ein erstes Rad vor dem Rahmen angeordnet und über einen ersten Schwenkarm aufgehängt, so dass es um eine in Fahrzeugquerrichtung verlaufende Schwenkachse unter dem Rahmen herum auf die hintere Seite geschwenkt werden kann. Ein zweites Rad ist hinter dem Rahmen angeordnet und über einen zweiten Schwenkarm aufgehängt, so dass es um eine ungefähr in Längsrichtung verlaufende Schwenkachse aufwärts geschwenkt werden kann.

Die EP 2 939 519 B1 zeigt einen Transportwagen für einen Erntevorsatz einer Landmaschine. Dabei ist an einem Rahmen ein Laufrad über zwei Schwenkarme aufgehängt, die um versetzte, in Fahrzeugquerrichtung verlaufende Schwenkachsen schwenkbar sind, wodurch das Laufrad von einer Vorderseite des Rahmens auf eine Hinterseite geschwenkt werden kann.

Die EP 2 656 715 B1 offenbart eine gezogene Erntemaschine. Dabei ist ein Schneidwerk vorne an einem Rahmen befestigt, und die Erntemaschine kann mittels einer Deichsel gezogen werden, die sich in einer Feldposition in Längsrichtung nach vorne erstreckt und in eine Transportanordnung geschwenkt werden kann, in der sie in Querrichtung verläuft. Eine Transportanordnung umfasst Feldlaufräder, die den Rahmen in der Feldposition stützen, sowie Transportlaufräder. Letztere sind in der Feldposition vom Boden abgehoben und in Längsrichtung hinter dem Rahmen angeordnet. Zum Wechsel in die Transportposition werden die Transportlaufräder an einer gemeinsamen Aufhängung abgesenkt, so dass sie den Rahmen tragen und die Feldlaufräder vom Boden abgehoben werden. Dann wird die Aufhängung der Transportlaufräder um eine vertikale Achse geschwenkt, wodurch ein Transportlaufrad unter dem Rahmen hindurchgeführt wird, bis die Transportlaufräder in Querrichtung ausgerichtet und beiderseits des Rahmens angeordnet sind.

Die Druckschrift EP 3 669 626 A1 offenbart ein Vorsatzgerät für eine selbstfahrende Erntemaschine, das ein Fahrwerk aufweist, welches von einer Arbeitsposition in eine Transportposition überführbar ist, so dass das Vorsatzgerät für einen Straßenbetrieb eingerichtet ist. Hierzu wird über zwei Betätigungsmechanismen die Radanordnung in eine Position bewegt, in der die Achse quer zur Längsrichtung des Vorsatzgeräts steht.

Die Druckschrift US 2015/0313083 A1 offenbart einen landwirtschaftlichen Mäher mit einem Fahrgestell, an welchem eine Transportvorrichtung gekoppelt ist. Die Transportvorrichtung weist zwei Aufhängungselemente auf, welche schwenkbar sind.

Die Druckschrift DE 10 2018 116 213 A1 offenbart ein Schneidwerk für eine landwirtschaftliche Arbeitsmaschine mit einer am Tragkörper angeordnete Vorderaufhängung, umfassend mindestens einen um eine Vorderachse drehenden Rads, und eine Hinteraufhängung mit zwei drehbaren Rädern. Beide Aufhängungen sind drehbar um die ihr zugeordneten vertikale Drehachsen ausgebildet und ermöglichen lediglich durch das Drehen eine Überführung zwischen Transportstellung und Arbeitsstellung.

Die Druckschrift EP 2 656 712 A1 offenbart eine gezogene Erntemaschine, welche mindestens ein Bodenrad zur Feldbearbeitung und mindestens ein Transportbodenrad aufweist. Über eine Vorrichtung wird der Bodenkontakt in einer Transport- und einer Arbeitsstellung hergestellt.

Aufgabe der Erfindung ist es, den Einsatz und Transport eines Anbaugeräts für eine Landmaschine zu vereinfachen.

Die Aufgabe wird gelöst mit einem Anbaugerät mit den Merkmalen des unabhängigen Patentanspruchs 1. Vorteilhafte Ausführungsformen sind den abhängigen Ansprüchen entnehmbar.

Dafür wird ein Anbaugerät zur Feldbearbeitung geschaffen, welches dazu eingerichtet ist, in einem Arbeitsmodus an eine Landmaschine gekoppelt und von dieser gestützt zu sein und in einem Transportmodus von einem Schlepper gezogen zu werden, aufweisend einen Rahmen, der im Arbeitsmodus wenigstens indirekt an die Landmaschine gekoppelt ist, sowie ein mit dem Rahmen verbundenes Fahrwerk mit einem Aufhängungsteil und wenigstens einem hieran gelagerten Laufrad, wobei das Fahrwerk durch wenigstens einen Aktor verstellbar ist zwischen einer dem Transportmodus entsprechenden Transportposition, in der es wenigstens teilweise vertikal unter dem Rahmen angeordnet ist, um diesen zu stützen, und einer dem Arbeitsmodus entsprechenden Arbeitsposition, in der es gegenüber der Transportposition wenigstens überwiegend vertikal aufwärts sowie horizontal seitwärts verlagert ist.

Der Begriff "Landmaschine" ist in diesem Zusammenhang nicht einschränkend auszulegen und bezeichnet jede Maschine, die in der Landwirtschaft eingesetzt werden kann, z.B. einen Traktor oder Schlepper, eine Mähmaschine, einen Feldhäcksler etc. Das Anbaugerät ist zur Feldbearbeitung eingerichtet, also z.B. zum Mähen, Häckseln, Ernten, Säen etc., wobei die begrifflich nicht zwischen "Feld" und "Acker" unterschieden wird. Beim Anbaugerät kann es sich z.B. um ein

Direktschneidwerk, eine Pick-up, einen Maisvorsatz, ein Getreideschneidwerk oder eine Traktoranbaumaschine wie Kreiselegge oder Sämaschine handeln. In einem Arbeitsmodus kann das Anbaugerät an die Landmaschine gekoppelt werden und wird von dieser gestützt bzw. getragen. Dabei ist es möglich, dass die Landmaschine nur einen Teil des Gewichts des Anbaugeräts trägt, bspw. derart, dass ein (normalerweise geringer) Anteil von einem (Hilfs-)Fahrwerk des Anbaugeräts getragen wird. Normalerweise ist das Anbaugerät allerdings im Arbeitsmodus vollständig durch die Landmaschine gestützt bzw. getragen. Die Kopplung an die Landmaschine ist zum einen statisch-mechanischer Art, zum anderen kann aber auch eine Kopplung zur Energie- bzw. Kraftübertragung in mechanischer, elektrischer, pneumatischer und/oder hydraulischer Form hergestellt werden. Das Anbaugerät kann insbesondere als Vorsatzgerät eingesetzt werden, also in Fahrtrichtung vorderseitig der Landmaschine, dies ist aber nicht zwangsläufig der Fall. Im Arbeitsmodus, also angekoppelt an die Landmaschine, ist die Breite des Anbaugeräts (also seine Dimension in Richtung der Querachse der Landmaschine) in der Regel deutlich größer als seine Länge (also seine Dimension in Richtung der Längsachse der Landmaschine), bspw. wenigstens doppelt so groß oder wenigstens dreimal so groß.

In einem Transportmodus kann das Anbaugerät von einem Schlepper gezogen werden. Das Anbaugerät wird hierzu (normalerweise mittels einer Deichsel) an den Schlepper (bzw. eine Zugmaschine oder einen Traktor) angehängt und von diesem gezogen. Obgleich hier für die Landmaschine und den Schlepper unterschiedliche Begriffe verwendet werden, kann es sich in der Praxis um ein und dasselbe Fahrzeug handeln, welches im Arbeitsmodus das angekoppelte Anbaugerät trägt und im Transportmodus (über eine geeignete Anhängerkupplung) zieht.

Das Anbaugerät weist einen Rahmen auf, der im Arbeitsmodus wenigstens indirekt an die Landmaschine gekoppelt ist. Der Rahmen ist normalerweise in sich starr ausgebildet und verleiht dem Anbaugerät mechanische Stabilität. Unterschiedliche bewegliche Teile können direkt oder indirekt an dem Rahmen gelagert sein, bspw. Messer eines Schneidwerks oder Häckslers, Zinken einer Pick-up oder dergleichen. Entsprechend der mechanischen Stabilität ist der Rahmen auch dasjenige Element, das direkt oder indirekt (über eine geeignete Kopplungsvorrichtung, die ggf. auch als Teil des Rahmens angesehen werden kann) an der Landmaschine angekoppelt wird. Diejenige Seite des Rahmens, die an die Landmaschine angekoppelt wird, bzw. die in angekoppeltem Zustand zur Landmaschine hin weist, wird hier und nachfolgend als Ankopplungsseite bezeichnet. Mit dem Rahmen ist ein Fahrwerk verbunden, das ein Aufhängungsteil und wenigstens ein hieran drehbar gelagertes Laufrad aufweist. Das Aufhängungsteil ist in der Regel in sich starr ausgebildet, kann aber aus einzelnen, miteinander starr verbundenen Elementen bestehen. Es ist mechanisch sowie hinsichtlich des Kraftflusses zwischen dem Rahmen und dem wenigstens ein Laufrad zwischengeordnet. Im Transportmodus steht das Anbaugerät auf dem Fahrwerk auf, welches Teil des Anbaugeräts ist bzw. in dieses integriert ist. Entsprechend wird das Anbaugerät bzw. dessen Gewicht im Transportmodus nicht oder nur zum Teil vom Schlepper gestützt bzw. getragen.

Das Fahrwerk durch ist wenigstens einen Aktor verstellbar zwischen einer dem Transportmodus entsprechenden Transportposition, in der es wenigstens teilweise vertikal unter dem Rahmen angeordnet ist, um diesen zu stützen, und einer dem Arbeitsmodus entsprechenden Arbeitsposition, in der es gegenüber der Transportposition wenigstens überwiegend vertikal aufwärts sowie horizontal seitwärts verlagert ist. Die Begriffe "vertikal" und "horizontal" beziehen sich auf die bestimmungsgemäße Ausrichtung des Anbaugeräts in der Transportposition. U.U. kann die vertikale Richtung im Arbeitsmodus mit der Hochachse der Landmaschine übereinstimmen oder nur geringfügig hiervon abweichen. Das Fahrwerk ist in der Transportposition wenigstens teilweise unterhalb des Rahmens angeordnet, wodurch es ihn stützen kann bzw. sich der Rahmen auf ihm abstützen kann. Die Transportposition entspricht dem Transportmodus bzw. ist diejenige Position, die für den Transportmodus vorgesehen ist. Wenn das Anbaugerät vom Fahrwerk gestützt wird, kann es von dem Schlepper gezogen werden. Die Arbeitsposition entspricht dem Arbeitsmodus bzw. ist für diesen vorgesehen. Im Arbeitsmodus wäre die Transportposition kontraproduktiv, da sie die Bodenfreiheit des Anbaugeräts deutlich reduzieren würde. In der Arbeitsposition ist das Fahrwerk im Verhältnis zur Transportposition - überwiegend oder insgesamt - in vertikaler Richtung aufwärts verlagert sowie in horizontaler Richtung seitwärts. Durch die seitliche Verlagerung kann das Fahrwerk gewissermaßen dem Rahmen ausweichen und seitlich desselben positioniert werden. Der wenigstens eine Aktor wirkt mittelbar oder unmittelbar zwischen dem Rahmen und dem Fahrwerk (bzw. dem Aufhängungsteil). Er kann insbesondere elektrisch, pneumatisch oder hydraulisch wirken. Bevorzugt ist er von außerhalb des Anbaugeräts ansteuerbar, bspw. von der Landmaschine aus, wenn das Anbaugerät an dieser angekoppelt ist.

Erfindungsgemäß ist das Aufhängungsteil mit dem Rahmen zum einen über ein Aufhängungs-Lagerelement mit mehreren Freiheitsgraden verbunden sowie zum anderen über einen Führungsmechanismus, der dazu eingerichtet ist, das Fahrwerk in einer mehrdimensionalen Schwenkbewegung um das Aufhängungs-Lagerelement zwischen der Transportposition und der Arbeitsposition zu führen. Das Aufhängungs-Lagerelement bildet gewissermaßen einen bezüglich des Rahmens festen Punkt des Aufhängungsteils, um den das Fahrwerk insgesamt geschwenkt werden kann, und zwar um mehrere Schwenkachsen, z.B. zwei, normalerweise drei Schwenkachsen. Es weist eine Mehrzahl von Freiheitsgraden, genauer gesagt Rotations-Freiheitsgraden, auf. Das Aufhängungs-Lagerelement kann beispielsweise als Gelenklager, Kugelgelenk oder Kreuz- bzw. Kardangelenk ausgebildet sein. Die sich somit ergebenden mehrdimensionalen Bewegungsmöglichkeiten des Aufhängungsteils gegenüber dem Rahmen werden durch den Führungsmechanismus eingeschränkt. Dieser führt das Fahrwerk kontrolliert zwischen der Transportposition und der Arbeitsposition, d. h. er führt das Fahrwerk von der Transportposition in die Arbeitsposition und umgekehrt. Die Führung ist dabei derart, dass sich eine mehrdimensionale Schwenkbewegung um das Aufhängungs-Lagerelement ergibt. In diesem Zusammenhang lässt sich eine eindimensionale Schwenkbewegung durch eine einzige, ortsfeste Schwenkachse beschreiben, während sich eine mehrdimensionale Schwenkbewegung nur durch mehrere ortsfeste Schwenkachsen (z.B. Roll-, Nick- und Gierachse) beschreiben lässt. Diese Schwenkachsen verlaufen allerdings normalerweise alle durch das Aufhängungs-Lagerelement und können sich insbesondere innerhalb desselben schneiden. Alternativ kann eine mehrdimensionale Schwenkbewegung auch beschrieben werden als Schwenkbewegung um eine virtuelle Schwenkachse, die allerdings nicht ortsfest ist, sondern ihrerseits eine Schwenkbewegung ausführt. Dies wird weiter unten noch erläutert.

Es hat sich gezeigt, dass durch eine mehrdimensionale Schwenkbewegung, die in geeigneter Weise geführt ist, eine verbesserte Bodenfreiheit während des Schwenkvorgangs erreicht werden kann, im Vergleich zu einer eindimensionalen Schwenkbewegung. Somit wird der Wechsel zwischen der Arbeitsposition und der Transportposition wesentlich erleichtert, da die Landmaschine das Anbaugerät weniger weit vom Boden abheben muss, damit der Schwenkvorgang erfolgreich durchgeführt werden kann. Trotzdem kann mit einem in sich starren Aufhängungsteil und nur einem einzigen Gelenklager gearbeitet werden. D.h. das Aufhängungsteil muss nicht aus einer Mehrzahl von beweglich verbundenen Einzelteilen zusammengesetzt sein, die gegeneinander verschwenkt werden müssen. Eine solche mehrteilige Ausgestaltung würde den Aufbau verkomplizieren und könnte die Stabilität des Aufhängungsteils beeinträchtigen. Auch unter diesem Aspekt ist die erfindungsgemäße Lösung vorteilhaft.

Für einen sicheren Transport muss das Anbaugerät durch wenigstens zwei Laufräder gestützt werden. Unter Umständen könnten hierfür zwei separate Aufhängungsteile mit jeweils eigenem Führungsmechanismus vorgesehen sein. Es ist allerdings bevorzugt, dass am Aufhängungsteil wenigstens zwei Laufräder gelagert sind. Normalerweise sind genau zwei Laufräder vorgesehen, die parallel angeordnet und in Richtung ihrer jeweiligen Rotationsachse voneinander beabstandet sind. Durch diese Ausführungsform weist das Fahrwerk insgesamt ebenso wie das Aufhängungselement Abmessungen auf, die das bodenfreie Schwenken zwischen den beiden Positionen zu einer besonderen Herausforderung machen. Allerdings hat sich gezeigt, dass sich dies durch die erfindungsgemäße mehrdimensionale Schwenkbewegung gut realisieren lässt.

Bevorzugt ist das Fahrwerk in der Arbeitsposition wenigstens überwiegend vertikal auf Höhe des Rahmens sowie auf einer Rückzugsseite horizontal seitlich desselben angeordnet. Der Begriff "Rückzugsseite" bezieht sich darauf, dass das Fahrwerk gewissermaßen zu dieser Seite zurückgezogen wird. Insbesondere ist es möglich, dass das Fahrwerk in der Arbeitsposition vollständig wenigstens auf Höhe des Rahmens angeordnet ist, also überhaupt nicht mehr vertikal abwärts gegenüber dem Rahmen absteht. Somit wird in der Arbeitsposition eine optimale Bodenfreiheit erreicht. Bezogen auf den Arbeitsmodus ist die Rückzugsseite oftmals entgegen der Fahrtrichtung der Landmaschine angeordnet. Die Rückzugsseite kann insbesondere mit der Kopplungsseite identisch sein und horizontal seitlich einer Deichselseite angeordnet sein, an welcher der Schlepper (normalerweise über eine Deichsel) angekoppelt wird. In vielen Fällen, bspw. bei einem Schneidvorsatz, handelt es sich bei der Deichselseite um eine Schmalseite und bei der Rückzugsseite bzw. Ankopplungsseite um eine Langseite.

Eine bevorzugte Ausführungsform sieht vor, dass das Aufhängungsteil einen Achsabschnitt aufweist, an dem das wenigstens eine Laufrad gelagert ist, und einen hiermit starr verbundenen Seitenabschnitt, an dem das Aufhängungs-Lagerelement angeordnet ist, wobei in der Transportposition der Rahmen auf dem Achsabschnitt aufliegt und sich der Seitenabschnitt vom Achsabschnitt aus auf der Rückzugsseite seitlich des Rahmens aufwärts zum Aufhängungs-Lagerelement erstreckt. Der Achsabschnitt und der Seitenabschnitt können einstückig ausgebildet sein und es ist möglich, dass keine klare Abgrenzung zwischen den beiden Abschnitten möglich ist. Funktionell besteht die Hauptfunktion des Achsabschnitts darin, die Gewichtskraft des Rahmens zu dem bzw. den Laufrädern zu übertragen, während die Hauptfunktion des Seitenabschnitts darin besteht, die Verbindung zum Aufhängungs-Lagerelement herzustellen, welches an einer für die Schwenkbewegung geeigneten Stelle am Rahmen angeordnet ist. Der Seitenabschnitt verläuft horizontal seitlich des Rahmens, und zwar auf der Rückzugseite. Dementsprechend ist auch das Aufhängungs-Lagerelement, zu dem sich der Seitenabschnitt erstreckt, auf der Rückzugsseite angeordnet. Die Form des Seitenabschnitts kann an die Außenkontur des Rahmens angepasst sein, damit der Seitenabschnitt in der Transportposition möglichst dicht am Rahmen positioniert sein kann. Er kann daher unter Umständen gebogen und/oder abgewinkelt sein, während der Achsabschnitt normalerweise insgesamt gerade ausgebildet ist.

Hinsichtlich der Funktionsweise des Führungsmechanismus' sind unterschiedliche Möglichkeiten gegeben. Bspw. könnte eine Kurvenbahn zur Führung des Aufhängungsteils eingesetzt werden, oder eine Mehrzahl von Aktoren (bspw. Linearaktoren), deren Wirkung zeitlich so koordiniert wird, dass hieraus die gewünschte mehrdimensionale Schwenkbewegung resultiert. Insbesondere Letzteres ist allerdings steuerungstechnisch anspruchsvoll und unter Umständen fehleranfällig. Bevorzugt weist der Führungsmechanismus einen ersten Führungsarm auf, der über ein erstes Armlager mit dem Rahmen und über ein zweites Armlager mit dem Seitenabschnitt verbunden ist, sowie einen zweiten Führungsarm, der über ein drittes Armlager mit dem Rahmen und über ein viertes Armlager mit dem Seitenabschnitt verbunden ist, wobei das vierte Armlager versetzt zu einer virtuellen Schwenkachse angeordnet ist, die durch das Aufhängungs-Lagerelement und das zweite Armlager verläuft. D. h. jeder der Führungsarme ist über je ein Armlager mit dem Rahmen und mit dem Seitenabschnitt des Aufhängungsteils verbunden. Jeder der Führungsarme ist normalerweise starr ausgebildet und dazu eingerichtet, dass seine Länge (bzw. der Abstand zwischen seinen Armlagern) beim Schwenkvorgang konstant bleibt. Optional wäre es denkbar, dass bspw. die Länge eines Führungsarms manuell justiert werden kann, was allerdings nicht während des Betriebs geschieht und auch nicht zur Realisierung der vorgesehenen Schwenkbewegung notwendig ist. Man kann durch die Verbindungslinie des zweiten Armlagers und des Aufhängungs-Lagerelements eine virtuelle Schwenkachse definieren, wenngleich diese aufgrund der komplizierten Führung des Aufhängungsteils im Allgemeinen nicht der (momentanen) Schwenkachse entspricht, um die das Fahrwerk geschwenkt wird. Betrachtet man die Position des vierten Armlagers relativ zu dieser virtuellen Schwenkachse, so ist das vierte Armlager hierzu versetzt, es liegt also nicht auf der virtuellen Schwenkachse. Anders ausgedrückt, das Aufhängungs-Lagerelement, das zweite Armlager und das vierte Armlager liegen nicht in einer Linie, sondern bilden Eckpunkte eines Dreiecks.

Hinsichtlich der Anordnung der Armlager sowie der Länge der Führungsarme bestehen unterschiedlichste Möglichkeiten. Bspw. kann das vierte Armlager näher am Aufhängungs-Lagerelement angeordnet sein als das zweite Armlager, so dass man den ersten Führungsarm, vom Aufhängungs-Lagerelement aus gesehen, als den "äußeren" oder "distalen" und den zweiten Führungsarm als den "inneren" oder "proximalen" bezeichnen kann. Gemäß einer Option ist der erste Führungsarm dabei länger als der zweite Führungsarm.

Im Allgemeinen lässt sich die Bewegung der Führungsarme nicht durch eine einfache bzw. eindimensionale Schwenkbewegung realisieren. Der jeweilige Führungsarm bewegt sich also nicht in einer Ebene, sondern muss sich dreidimensional bewegen, um die Schwenkbewegung des Fahrwerks zu ermöglichen. Aus diesem Grund weist jedes Armlager bevorzugt eine Mehrzahl von Freiheitsgraden auf. Das jeweilige Armlager kann bspw. als Gelenklager, Kugelgelenk, Kreuzgelenk oder dergleichen ausgebildet sein.

Während der Schwenkbewegung wirken zum Teil erhebliche Zwangskräfte zwischen Aufhängungsteil und Rahmen. Diese werden zu einem großen Teil von den Führungsarmen übertragen, welche im Allgemeinen in ihrer Erstreckungsrichtung, die der Verbindungslinie zwischen den endseitigen Armlagern entspricht, deutlich stärker belastbar sind als quer hierzu. Um die in verschiedenen Richtungen wirkenden Zwangskräfte daher optimal aufnehmen zu können, ist es vorteilhaft, wenn die Führungsarme näherungsweise rechtwinklig zueinander stehen, so dass ein Führungsarm die Kraftkomponenten in einer Richtung aufnimmt, während der andere Führungsarm hierzu senkrechte Kraftkomponenten aufnimmt. Es ist daher bevorzugt, dass die Führungsarme in wenigstens einer der Positionen, also in der Arbeitsposition und/oder in der Transportposition, in einem Winkel zwischen 60° und 120° zueinander verlaufen. Der Winkel kann weiter bevorzugt zwischen 70° und 110° oder zwischen 80° und 100° liegen. In diesem Sinne wird der Verlauf eines Führungsarms durch die Verbindungslinie zwischen seinen endseitigen Armlagern definiert. Die entsprechenden Verbindungslinien der beiden Führungsarme schneiden sich in der Regel nicht, d. h. sie sind windschief, allerdings kann der Winkel durch gedachte Parallelverschiebung der einen Verbindungslinie zur anderen ermittelt werden.

Der Führungsmechanismus kann das Fahrwerk derart führen, dass die mehrdimensionale Schwenkbewegung eine erste Schwenkbewegung der virtuellen Schwenkachse um das Aufhängungs-Lagerelement sowie eine zweite Schwenkbewegung des Fahrwerks um die virtuelle Schwenkachse beinhaltet. Die beiden Schwenkbewegungen laufen selbstverständlich nicht zeitlich nacheinander ab, sondern überlagern einander. Im Endergebnis kann aber festgestellt werden, dass die virtuelle Schwenkachse ihre Ausrichtung verändert (gemäß der ersten Schwenkbewegung) und dass zusätzlich das Fahrwerk seine Orientierung um die virtuelle Schwenkachse verändert (gemäß der zweiten Schwenkbewegung). Die erste Schwenkbewegung kann dabei wiederum eine mehrdimensionale Schwenkbewegung sein, d. h. die virtuelle Schwenkachse muss sich nicht zwangsläufig in einer Ebene bewegen. Betrachtet man nur die Veränderung zwischen der Arbeitsposition und der Transportposition, ist es möglich, dass durch die zweite Schwenkbewegung das Fahrwerk um einen Winkel zwischen bspw. 135° und 225° um die virtuelle Schwenkachse schwenkt, während die virtuelle Schwenkachse selbst ihre Ausrichtung nur um einen Winkel zwischen 5° und 60° verändert. Dennoch trägt die erste Schwenkbewegung wesentlich zur Optimierung des gesamten Schwenkvorgangs bei.

Insbesondere, aber nicht ausschließlich, im Zusammenhang mit den o.g. Führungsarmen ist es bevorzugt, dass ein zwischen dem Rahmen und dem Seitenabschnitt wirkender Linearaktor dazu eingerichtet ist, das Fahrwerk zwischen der Arbeitsposition und der Transportposition zu verstellen. Der Linearaktor kann insbesondere als elektrisch, pneumatisch oder hydraulisch wirkender Zylinder ausgebildet sein. Normalerweise ist er auf der Rückzugsseite des Rahmens angeordnet. Er wirkt zwischen dem Rahmen und dem Seitenabschnitt, wobei er mit diesen jeweils direkt oder indirekt verbunden sein kann. Es hat sich gezeigt, dass mit einem einzigen Linearaktor und einem gewissermaßen passiv wirkenden Führungsmechanismus eine komplexe, vorteilhafte Schwenkbewegung realisiert werden kann.

Hinsichtlich der Kraftübertragung vom Linearaktor auf den Rahmen sowie den Seitenabschnitt sind unterschiedliche Möglichkeiten gegeben. Insbesondere ist zu unterscheiden zwischen direkter und indirekter Kraftübertragung. Gemäß einer vorteilhaften Ausgestaltung wirkt der Linearaktor auf einen Umlenkhebel, der schwenkbar mit dem Rahmen verbunden ist und über einen Verbindungslenker mit dem Seitenabschnitt verbunden ist. D.h. die Kraftübertragung vom Linearaktor auf den Seitenabschnitt erfolgt über zwei zwischengeordnete Bauteile, nämlich zum einen den Umlenkhebel, der schwenkbar mit dem Rahmen verbunden ist. Für die Anbindung kann ein Umlenkhebel-Schwenklager eingesetzt werden, das lediglich einen Freiheitsgrad aufweist. Zum anderen erfolgt die Kraftübertragung vom Umlenkhebel auf den Seitenabschnitt über einen Verbindungslenker. Dieser ist über ein erstes Verbindungslenker-Schwenklager mit dem Umlenkhebel verbunden und über ein zweites Verbindungslenker-Schwenklager mit dem Seitenabschnitt. Unter Umständen kann jedes der Verbindungslenker-Schwenklager lediglich einen Freiheitsgrad aufweisen, je nach Ausführungsform kann es auch günstig sein, dass wenigstens ein Verbindungslenker-Schwenklager mehrere Freiheitsgrade aufweist und bspw. als Gelenklager ausgebildet ist. Von besonderer Bedeutung ist in diesem Zusammenhang der schwenkbare Umlenkhebel, in dem der Linearaktor ein Drehmoment erzeugt. Je nach räumlicher Anordnung der verschiedenen Schwenklager führt die Kraft des Linearaktors u.U. zu einer größeren oder kleineren Kraft auf den Verbindungslenker. Außerdem ist eine Kraftumlenkung möglich, so dass eine optimale Zug- bzw. Druckwirkung auf den Seitenabschnitt ausgeübt werden kann. Der Verbindungslenker ebenso wie der Umlenkhebel sind normalerweise als starre Bauteile ausgebildet, d. h. sie erfahren keine nennenswerte Verformung beim Normalbetrieb. Optional kann bspw. die Länge des Verbindungslenkers manuell justierbar sein.

Insbesondere wenn das Anbaugerät vom Schlepper gezogen wird, muss unter Sicherheitsaspekten gewährleistet sein, dass das Fahrwerk in der vorgesehenen Transportposition verbleibt und sich nicht verstellen kann. Um dies sicherzustellen, kann das Anbaugerät ein Arretierungselement aufweisen, das verstellbar ist zwischen einer Arretierungsposition, in der es das Fahrwerk in der Transportposition arretiert, und einer Freigabeposition, in der es ein Verstellen des Fahrwerks in die Arbeitsposition freigibt. Das Arretierungselement kann entweder am Fahrwerk oder am Rahmen angeordnet sein und wirkt in der Arretierungsposition, z.B. nach Art eines Riegels, mit einer Struktur am jeweils anderen Element (Rahmen oder Fahrwerk) zusammen, normalerweise durch einen Formschluss.

Wie bereits oben erwähnt wurde, ist das Anbaugerät normalerweise über eine Deichsel an den Schlepper ankoppelbar. Diese Deichsel kann verstellbar mit dem Rahmen verbunden sein, genauer gesagt kann sie ebenfalls zwischen einer dem Transportmodus zugeordneten Transportposition und einer dem Arbeitsmodus zugeordneten Arbeitsposition verstellbar sein. Die Verstellbarkeit, welche nicht Gegenstand der vorliegenden Anmeldung ist, kann über ein oder mehrere hierfür vorgesehene Aktoren realisiert sein. Gemäß einer bevorzugten Ausgestaltung wirkt ein Kopplungsmechanismus zwischen der Deichsel und dem Arretierungselement, um das Arretierungselement in der Arretierungsposition zu halten, wenn die Deichsel in der Transportposition ist, und es in die Freigabeposition zu stellen, wenn die Deichsel in die Arbeitsposition verstellt wird. Über einen Kopplungsmechanismus, der bspw. einfach mechanisch mittels einer Kopplungsstange oder einem Zugseil wirken kann, wird das Arretierungselement gewissermaßen entriegelt, wenn die Deichsel in die Arbeitsposition verstellt wird. D.h., das Verstellen der Deichsel in die Arbeitsposition ist Vorbedingung dafür, dass das Fahrwerk verstellt werden kann.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Seitenansicht eines erfindungsgemäßen Anbaugeräts mit einem Fahrwerk in einer Transportposition;
- Fig. 2: eine Seitenansicht eines Teils des Anbaugeräts aus Fig. 1 mit dem Fahrwerk in einer Zwischenposition;
- Fig. 3: eine Seitenansicht eines Teils des Anbaugeräts aus Fig. 1 mit dem Fahrwerk in einer Arbeitsposition;
- Fig. 4: eine perspektivische Ansicht eines Teils des Anbaugeräts aus Fig. 1 mit dem Fahrwerk in der Arbeitsposition; sowie
- Fig. 5-8: perspektivische Detailansichten des Anbaugeräts aus Fig.1 mit dem Fahrwerk in verschiedenen Positionen.

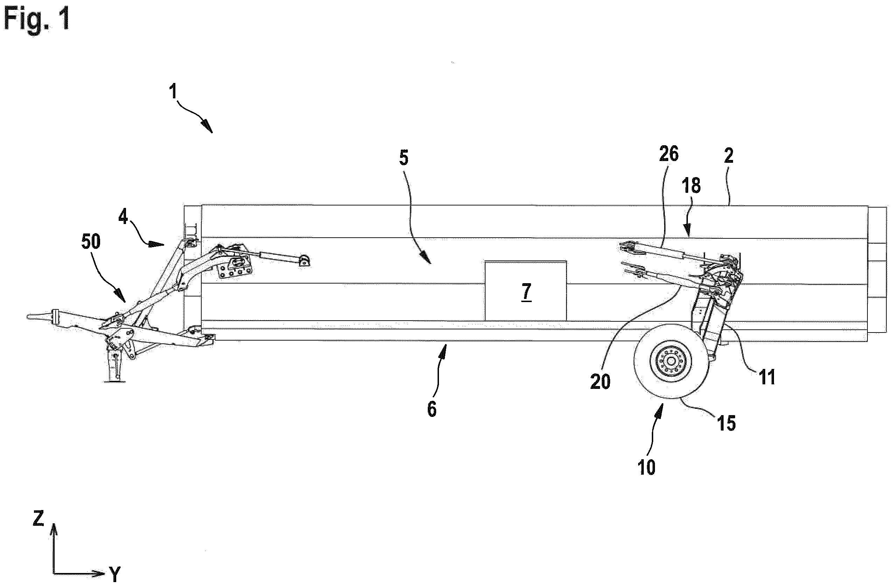

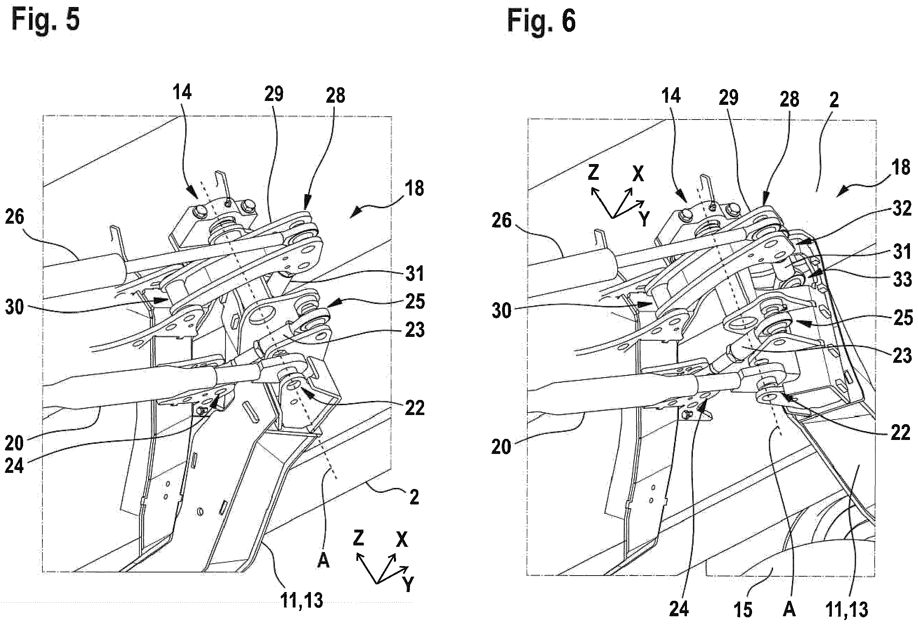

Fig. 1 zeigt ein erfindungsgemäßes Anbaugerät 1, in diesem Fall einen Erntevorsatz für einen Feldhäcksler. Das Anbaugerät 1 weist einen Rahmen 2 auf, der in einem Arbeitsmodus mit einem hier schematisch dargestellten Ankopplungsbereich 7, der auf einer Ankopplungsseite 5 angeordnet ist, an den hier nicht dargestellten Feldhäcksler gekoppelt wird. In diesem Arbeitsmodus ist das Anbaugerät 1 freitragend durch den Feldhäcksler gestützt. In den Figuren sind, bezogen auf den angekoppelten Zustand des Anbaugeräts 1, die Längsachse X, die Querachse Y sowie die Hochachse Z des Feldhäckslers eingezeichnet. Der Rahmen 2 ist in Richtung der Querachse Y deutlich länger als in Richtung der Längsachse X, so dass die Ankopplungsseite 5, ebenso wie eine gegenüberliegende Vorderseite 3, als Langseite des Rahmens 2 bezeichnet werden kann. Demgegenüber kann eine seitlich der Ankopplungsseite 5 angeordnete Deichselseite 4 als Schmalseite bezeichnet werden. Fig. 1 sowie die Detailansicht in Fig. 5 zeigen das Anbaugerät 1 entsprechend einem Transportmodus, in welchem es von einem ebenfalls nicht dargestellten Schlepper, bspw. dem Feldhäcksler selbst, gezogen werden kann. Die vorgesehene Fahrtrichtung entspricht dabei der Querachse Y, so dass bei Straßenfahrt eine zulässige Breite quer zur Fahrtrichtung nicht überschritten wird. Der Rahmen 2 ist mit einer Deichsel 50 verbunden, über die er an den Schlepper angekoppelt wird. Die Deichsel 50 ist verstellbar zwischen einer Transportposition, welche bspw. in Fig. 1 dargestellt ist und in der sie von der Deichselseite 4 abragt, und einer Arbeitsposition, in der sie zum Rahmen 2 hin geschwenkt ist. Die entsprechende Schwenkbewegung ist hier nicht dargestellt.

Das Anbaugerät 1 weist außerdem eine Fahrwerk 10 auf, das im Transportmodus in einer Transportposition angeordnet ist, in der es wenigstens teilweise vertikal unter dem Rahmen 2 angeordnet ist, um diesen zu stützen. Wenn das Anbaugerät 1 durch den Schlepper gezogen wird, lastet ein überwiegender Teil des Gewichts des Rahmens 2 auf dem Fahrwerk 10. Das Fahrwerk 10 weist zwei Laufräder 15 auf, die drehbar an einem Aufhängungsteil 11 gelagert sind, genauer gesagt einem Achsabschnitt 12 desselben. In der Transportposition liegt der Rahmen 2 mit einer Unterseite 6 auf dem Achsabschnitt 12 auf, so dass er sich über die Laufräder 15 gegen einen hier nicht dargestellten Boden abstützen kann. Das Aufhängungsteil 11 weist außer dem Achsabschnitt 12 einen hiermit starr verbundenen Seitenabschnitt 13 auf, der sich auf der Ankopplungsseite 5, welche nachfolgend auch als Rückzugsseite bezeichnet wird, seitlich des Rahmens 2 aufwärts zu einem Aufhängungs-Lagerelement bzw. Aufhängungs-Gelenklager 14 erstreckt. Das Aufhängungs-Gelenklager 14 ermöglicht eine mehrdimensionale Schwenkbewegung des Aufhängungsteils 11 und somit des gesamten Fahrwerks 10 relativ zum Rahmen 2. Es kann bspw. als Kugelgelenk ausgebildet sein.

Abgesehen von der Verbindung über das Aufhängungs-Gelenklager 14 ist der Seitenabschnitt 13 über einen Führungsmechanismus 18 mit dem Rahmen 2 verbunden, der in den Detaildarstellungen von Fig.5-8 erkennbar ist. Der Führungsmechanismus 18 weist einen ersten Führungsarm 20 auf, der durch ein erstes Armlager 21 mit dem Rahmen 2 sowie ein zweites Armlager 22 mit dem Seitenabschnitt 13 verbunden ist, sowie einen zweiten Führungsarm 23, der durch ein drittes Armlager 24 mit dem Rahmen 2 und ein viertes Armlager 25 mit dem Seitenabschnitt 13 verbunden ist. Sämtliche Armlager 21, 22, 24, 25 sind als Gelenklager ausgebildet und ermöglichen dreidimensionale Schwenkbewegungen. Der erste Führungsarm 20 ist deutlich länger als der zweite Führungsarm 23 und verläuft in der Transportposition in einem Winkel zwischen 80° und 100° zu letzterem. Durch diese näherungsweise rechtwinklige Stellung der beiden Führungsarme 20, 23 zueinander können sie zueinander orthogonale Kraftkomponenten, die zwischen dem Fahrwerk 10 und dem Rahmen 2 wirken, optimal entlang ihrer jeweiligen Erstreckungsrichtung aufnehmen. Durch das Aufhängungs-Gelenklager 14 und das zweite Armlager 22 verläuft eine bezüglich des Aufhängungselements 11 körperfeste virtuelle Schwenkachse A. Das vierte Armlager 25 ist gegenüber der virtuellen Schwenkachse A versetzt, so dass das Aufhängungs-Gelenklager 14, das zweite Armlager 22 und das vierte Armlager 25 nicht auf einer Linie liegen, sondern ein Dreieck aufspannen. Die Länge der Führungsarme 20, 23 kann, wie in den Figuren angedeutet, manuell justierbar sein. Dies ist aber rein optional und die Führungsarme 20, 23 können auch durch jeweils eine Stange fester Länge gebildet sein.

Außerdem ist ein Linearaktor, in diesem Fall ein bspw. hydraulisch wirkender Zylinder 26, über ein erstes Zylinder-Schwenklager 27 mit dem Rahmen 2 sowie über ein zweites Zylinder-Schwenklager 28 mit einem Umlenkhebel 29 verbunden. Letzterer ist wiederum über einen Umlenkhebel-Schwenklager 30 mit dem Rahmen verbunden. Die genannten Schwenklager 27, 28, 30 können jeweils einen Freiheitsgrad aufweisen. Der Umlenkhebel 29 ist über ein erstes Verbindunglenker-Gelenklager 32 mit einem Verbindunglenker 31 verbunden, der wiederum über ein zweites Verbindunglenker-Gelenklager 33 mit dem Seitenabschnitt 13 verbunden ist.

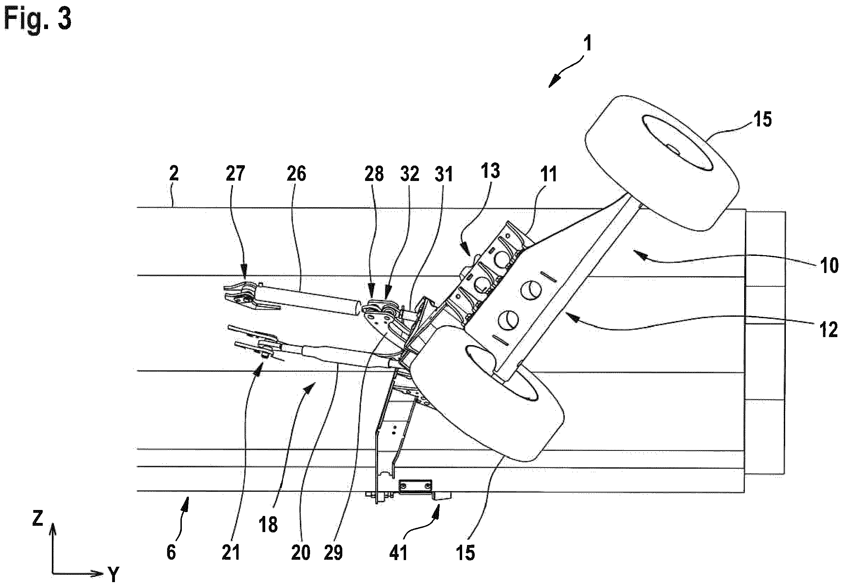

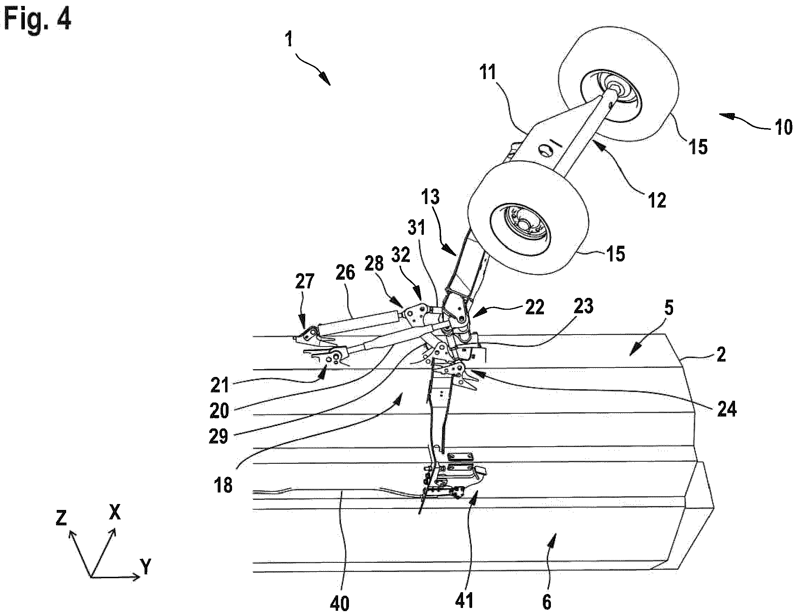

An der Unterseite 6 des Rahmens 2 ist ein Arretierungselement 41 angeordnet, mittels dessen das Fahrwerk 10 in der Transportposition arretiert werden kann. Es ist über einen in Fig. 4 gezeigten Kopplungsmechanismus 40 an die Deichsel 50 gekoppelt. Wenn das Anbaugerät 1 zur Feldbearbeitung eingesetzt werden soll, wird es zunächst an den Feldhäcksler angekoppelt, so dass dieser es freitragend stützt. Anschließend kann vom Feldhäcksler aus die Deichsel 50 aus der in Fig. 1 dargestellten Transportposition in ihre Arbeitsposition verstellt werden. Durch Kraftübertragung über den Kopplungsmechanismus 40 wird dabei das Arretierungselement 41 aus einer Arretierungsstellung in eine Freigabestellung verstellt, in der es die Verstellung des Fahrwerks 10 aus der Transportposition in die Arbeitsposition freigibt. Ebenfalls vom Feldhäcksler aus wird der Zylinder 26 angesteuert, um die Verstellung des Fahrwerks 10 in eine in Fig. 3 und 4 dargestellte Arbeitsposition zu bewirken. In der Arbeitsposition ist das Fahrwerk 10 überwiegend horizontal seitlich des Rahmens 2 und vertikal wenigstens auf Höhe desselben (teilweise sogar darüber) angeordnet.

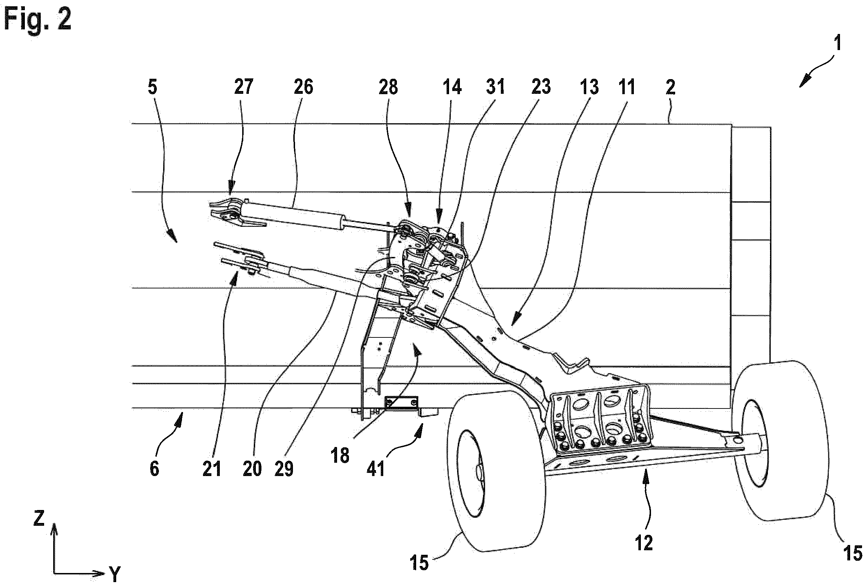

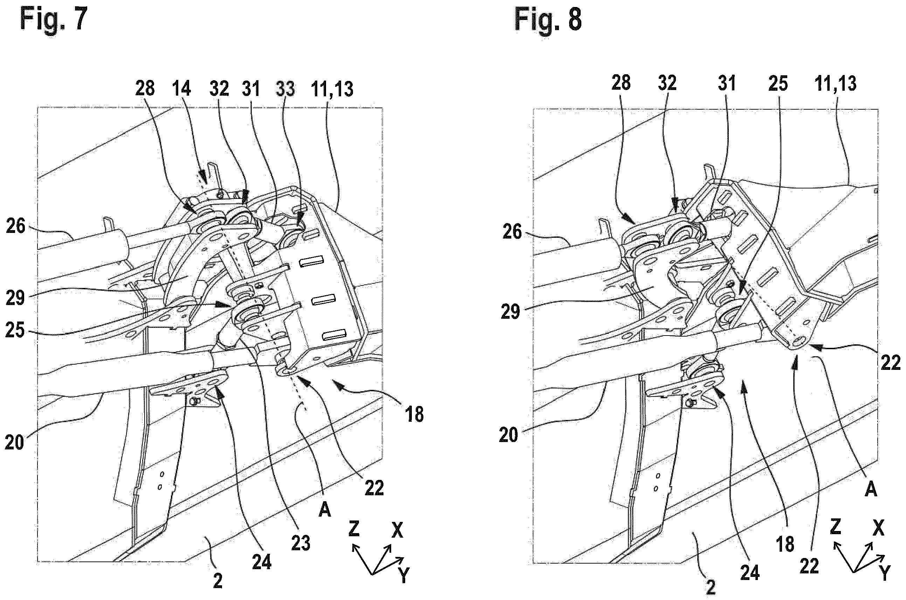

Durch die Ansteuerung zieht sich der Zylinder 26 zusammen und übt eine Zugkraft auf den Umlenkhebel 29 aus, die über ein entsprechendes Drehmoment wiederum zu einer Zugkraft auf den Verbindunglenker 31 führt. Letztere führt wiederum zu einem Drehmoment auf das Aufhängungsteil 11. Die weitere Schwenkbewegung des Aufhängungsteils 11 (bzw. des gesamten Fahrwerks 10) wird durch den Führungsmechanismus 18 mit den Führungsarmen 20, 23 bestimmt. Die resultierende mehrdimensionale Schwenkbewegung beinhaltet eine erste Schwenkbewegung der virtuellen Schwenkachse A um das Aufhängungs-Gelenklager 14, sowie andererseits eine zweite Schwenkbewegung des Fahrwerks 10 um die virtuelle Schwenkachse A. Im vorliegenden Fall entspricht die zweite Schwenkbewegung einem Winkel von ca. 140°, während die virtuelle Schwenkachse A ihrerseits um einen deutlich kleineren Winkel von weniger als 40° schwenkt, wie aus dem Vergleich von Fig. 5 und Fig. 8 ersichtlich ist, welche der Transportposition bzw. der Arbeitsposition entsprechen. Die erste Schwenkbewegung erfolgt dabei normalerweise nicht in einer Ebene. Außerdem lässt sich im zeitlichen Ablauf gemäß Fig. 5 - 8 erkennen, dass das zweite Armlager 22 gemäß einer in Fig. 6 dargestellten ersten Zwischenposition sich zunächst dem Rahmen 2 annähert, bevor es sich gemäß einer in Fig. 7 dargestellten zweiten Zwischenposition sowie der in Fig. 8 dargestellten Arbeitsposition wieder vom Rahmen 2 entfernt. Die in Fig. 2 dargestellte Zwischenposition liegt hinsichtlich des Bewegungsablaufs zwischen den in Fig. 6 und Fig. 7 dargestellten Zwischenpositionen. Insgesamt ermöglicht die mehrdimensionale Schwenkbewegung eine verbesserte Bodenfreiheit im Vergleich zu einer einfachen Schwenkbewegung um eine bezüglich des Rahmens 2 ortsfeste Schwenkachse. Dennoch wird die Schwenkbewegung mit einem einzigen Zylinder 26 erreicht. Das Aufhängungsteil 11 ist in sich starr ausgebildet und weist keine gegeneinander schwenkbaren Elemente auf. Somit ist es konstruktiv einfach und vor allen Dingen stabil ausgebildet.

## Patentansprüche

1. Anbaugerät (1) zur Feldbearbeitung, welches dazu eingerichtet ist, in einem Arbeitsmodus an eine Landmaschine gekoppelt und von dieser gestützt zu sein und in einem Transportmodus von einem Schlepper gezogen zu werden, aufweisend einen Rahmen (2), der im Arbeitsmodus wenigstens indirekt an die Landmaschine gekoppelt ist, sowie ein mit dem Rahmen (2) verbundenes Fahrwerk (10) mit einem Aufhängungsteil (11) und wenigstens einem hieran gelagerten Laufrad (15), wobei das Fahrwerk (10) durch wenigstens einen Linearaktor (26) verstellbar ist zwischen einer dem Transportmodus entsprechenden Transportposition, in der es wenigstens teilweise vertikal unter dem Rahmen (2) angeordnet ist, um diesen zu stützen, und einer dem Arbeitsmodus entsprechenden Arbeitsposition, in der es gegenüber der Transportposition wenigstens überwiegend vertikal aufwärts sowie horizontal seitwärts verlagert ist, wobei das Aufhängungsteil (11) mit dem Rahmen (2) zum einen über ein Aufhängungs-Lagerelement (14) mit mehreren Freiheitsgraden verbunden ist sowie zum anderen über einen Führungsmechanismus (18), der dazu eingerichtet ist, das Fahrwerk (10) in einer mehrdimensionalen Schwenkbewegung um das Aufhängungs-Lagerelement (14) zwischen der Transportposition und der Arbeitsposition zu führen.

2. Anbaugerät nach Anspruch 1, **dadurch gekennzeichnet, dass** das Fahrwerk (10) in der Arbeitsposition wenigstens überwiegend vertikal auf Höhe des Rahmens (2) sowie auf einer Rückzugsseite (5) horizontal seitlich desselben angeordnet ist.

3. Anbaugerät nach Anspruch 2, **dadurch gekennzeichnet, dass** das Aufhängungsteil (11) einen Achsabschnitt (12) aufweist, an dem das wenigstens eine Laufrad (15) gelagert ist, und einen hiermit starr verbundenen Seitenabschnitt (13), an dem das Aufhängungs-Lagerelement (14) angeordnet ist, wobei in der Transportposition der Rahmen (2) auf dem Achsabschnitt (12) aufliegt und sich der Seitenabschnitt (13) vom Achsabschnitt (12) aus auf der Rückzugsseite (5) seitlich des Rahmens (2) aufwärts zum Aufhängungs-Lagerelement (14) erstreckt.

4. Anbaugerät nach Anspruch 3, **dadurch gekennzeichnet, dass** der Führungsmechanismus (18) einen ersten Führungsarm (20) aufweist, der über ein erstes Armlager (21) mit dem Rahmen (2) und über ein zweites Armlager (22) mit dem Seitenabschnitt (13) verbunden ist, sowie einen zweiten Führungsarm (23), der über ein drittes Armlager (24) mit dem Rahmen (2) und über ein viertes Armlager (25) mit dem Seitenabschnitt (13) verbunden ist, wobei das vierte Armlager (25) versetzt zu einer virtuellen Schwenkachse (A) angeordnet ist, die durch das Aufhängungs-Lagerelement (14) und das zweite Armlager (22) verläuft.

5. Anbaugerät nach Anspruch 4, **dadurch gekennzeichnet, dass** jedes der Armlager (21, 22, 24, 25) mehrere Freiheitsgrade aufweist.

6. Anbaugerät nach einem der Ansprüche 4 oder 5, **dadurch gekennzeichnet, dass** die Führungsarme (20, 23) in wenigstens einer der Positionen in einem Winkel zwischen 70° und 110° zueinander verlaufen.

7. Anbaugerät nach einem der Ansprüche 4 - 6, **dadurch gekennzeichnet, dass** die mehrdimensionale Schwenkbewegung eine erste Schwenkbewegung der virtuellen Schwenkachse (A) um das Aufhängungs-Lagerelement (14) sowie eine zweite Schwenkbewegung des Fahrwerks (10) um die virtuelle Schwenkachse (A) beinhaltet.

8. Anbaugerät nach einem der vorangehenden Ansprüche, **dadurch gekennzeichnet, dass** der Linearaktor (26) zwischen dem Rahmen (2) und dem Seitenabschnitt (13) wirkt und dazu eingerichtet ist, das Fahrwerk (10) zwischen der Arbeitsposition und der Transportposition zu verstellen.

9. Anbaugerät nach einem der Ansprüche 3 - 8, **dadurch gekennzeichnet, dass** der Linearaktor (26) mit einem Umlenkhebel (29) verbunden ist, der schwenkbar mit dem Rahmen (2) verbunden ist und der über einen Verbindungslenker (31) mit dem Seitenabschnitt (13) verbunden ist.

10. Anbaugerät nach einem der vorangehenden Ansprüche, **dadurch gekennzeichnet, dass** am Aufhängungsteil (11) wenigstens zwei Laufräder (15) gelagert sind.

11. Anbaugerät nach einem der vorangehenden Ansprüche, **dadurch gekennzeichnet, dass** dieses ein Arretierungselement (41) aufweist, das verstellbar ist zwischen einer Arretierungsposition, in der es das Fahrwerk (10) in der Transportposition arretiert, und einer Freigabeposition, in der es ein Verstellen des Fahrwerks (10) in die Arbeitsposition freigibt.

12. Anbaugerät nach Anspruch 11, **dadurch gekennzeichnet, dass** dieses eine Deichsel (50) aufweist, die zwischen einer dem Transportmodus zugeordneten Transportposition und einer dem Arbeitsmodus zugeordneten Arbeitsposition verstellbar ist, wobei ein Kopplungsmechanismus (40) zwischen der Deichsel (10) und dem Arretierungselement (41) wirkt, um das Arretierungselement (41) in der Arretierungsposition zu halten, wenn die Deichsel (10) in der Transportposition ist, und es in die Freigabeposition zu stellen, wenn die Deichsel (10) in die Arbeitsposition verstellt wird.

## Claims

1. Field-working attachment (1) which is designed to be coupled to an agricultural machine in a working mode and to be supported thereby and to be pulled by a tractor in a transport mode, the field-working attachment comprising a frame (2), which is at least indirectly coupled to the agricultural machine in the working mode, and comprising a chassis (10), which is connected to the frame (2) and has a suspension part (11) and at least one running wheel (15) mounted thereon, the chassis (10) being adjustable by at least one linear actuator (26) between a transport position corresponding to the transport mode, in which position it is arranged at least partially vertically under the frame (2) in order to support it, and a working position corresponding to the working mode, in which position it is displaced at least predominantly vertically upwards and horizontally sideways with respect to the transport position,
the suspension part (11) being connected to the frame (2) both via a suspension bearing element (14) having several degrees of freedom and via a guide mechanism (18), which is designed to guide the chassis (10) in a multi-dimensional pivoting movement about the suspension bearing element (14) between the transport position and the working position.

2. Attachment according to claim 1, **characterized in that,** in the working position, the chassis (10) is arranged at least predominantly vertically at the height of the frame (2) and on a retraction side (5) horizontally to the side of the same.

3. Attachment according to claim 2, **characterized in that** the suspension part (11) has an axle portion (12) on which the at least one running wheel (15) is mounted, and a side portion (13) rigidly connected thereto on which the suspension bearing element (14) is arranged, the frame (2) resting on the axle portion (12) in the transport position and the side portion (13) extending, on the retraction side (5) at the side of the frame (2), from the axle portion (12) upwards to the suspension bearing element (14).

4. Attachment according to claim 3, **characterized in that** the guide mechanism (18) comprises a first guide arm (20), which is connected to the frame (2) via a first arm bearing (21) and to the side portion (13) via a second arm bearing (22), and comprises a second guide arm (23), which is connected to the frame (2) via a third arm bearing (24) and to the side portion (13) via a fourth arm bearing (25), the fourth arm bearing (25) being arranged so as to be offset from a virtual pivot axis (A) which runs through the suspension bearing element (14) and the second arm bearing (22).

5. Attachment according to claim 4, **characterized in that** each of the arm bearings (21, 22, 24, 25) has several degrees of freedom.

6. Attachment according to any of claims 4 or 5, **characterized in that,** in at least one of the positions, the guide arms (20, 23) extend at an angle of between 70° and 110° to one another.

7. Attachment according to any of claims 4-6, **characterized in that** the multi-dimensional pivoting movement includes a first pivoting movement of the virtual pivot axis (A) about the suspension bearing element (14) and a second pivoting movement of the chassis (10) about the virtual pivot axis (A).

8. Attachment according to any of the preceding claims,
**characterized in that** the linear actuator (26) acts between the frame (2) and the side portion (13) and is designed to adjust the chassis (10) between the working position and the transport position.

9. Attachment according to any of claims 3-8, **characterized in that** the linear actuator (26) is connected to a deflection lever (29), which is pivotally connected to the frame (2) and which is connected to the side portion (13) via a connecting link (31).

10. Attachment according to any of the preceding claims,
**characterized in that** at least two running wheels (15) are mounted on the suspension part (11).

11. Attachment according to any of the preceding claims,
**characterized in that** it comprises a locking element (41), which is adjustable between a locking position, in which it locks the chassis (10) in the transport position, and a release position, in which it allows adjustment of the chassis (10) into the working position.

12. Attachment according to claim 11, **characterized in that** it comprises a drawbar (50), which is adjustable between a transport position associated with the transport mode and a working position associated with the working mode, a coupling mechanism (40) acting between the drawbar (10) and the locking element (41) in order to hold the locking element (41) in the locking position when the drawbar (10) is in the transport position and to place it in the release position when the drawbar (10) is adjusted into the working position.

## Revendications

1. Equipement rapporté (1) pour les travaux agricoles, conçus pour :
- dans un mode de travail, être couplé à une machine agricole et être soutenu par celle-ci, et
- dans un mode de transport, être tiré par un tracteur,
équipement comprenant un châssis (2) qui, en mode de travail est couplé au moins directement à la machine agricole ainsi qu'un train de roulement (10) relié au châssis (2) et ayant une pièce de suspension (11) et au moins une roue de roulement (15) montée sur celle-ci,
- le train de roulement (10) étant déplacé par au moins un actionneur linéaire (26), entre une position de transport correspondant au mode de transport dans laquelle il est, au moins en partie, verticalement sous le châssis (2) pour le soutenir et une position de travail correspondant au mode de travail dans laquelle il est décalé latéralement par rapport à la position de transport, au moins principalement de manière verticale vers le haut et horizontalement vers le côté,
- la pièce de suspension (11) étant reliée au châssis (2) d'une part avec un palier de suspension (14) à plusieurs degrés de liberté et, d'autre part, avec un mécanisme de guidage (18) pour guider le train de roulement (10) dans un mouvement de basculement à plusieurs dimensions, autour de l'élément de palier de suspension (14) entre la position de transport et la position de travail.

2. Equipement rapporté selon la revendication 1,
**caractérisé en ce que**
le train de roulement (10), en position de travail, est situé au moins principalement verticalement à la hauteur du châssis (2) et aussi décalé horizontalement, latéralement sur un côté de retrait (5) de celui-ci.

3. Equipement rapporté selon la revendication 2,
**caractérisé en ce que**
la pièce de suspension (11) a un segment d'axe (12) recevant au moins une roue de roulement (15) et un segment latéral (13) relié rigidement et muni du palier de suspension (14),
- en position de transport, le châssis (2) s'appuie sur le segment d'axe (12) et le segment latéral (13) s'étend à partir du segment d'axe (12) sur le côté de retrait (5), latéralement par rapport au châssis (2), en remontant vers le palier de suspension (14).

4. Equipement rapporté selon la revendication 3,
**caractérisé en ce que**
le mécanisme de guidage (18) comporte un premier bras de guidage (20) relié par un premier palier de bras (21) au châssis (2) et par un second palier de bras (22) au segment latéral (13) ainsi qu'un second bras de guidage (23) relié par un troisième palier de bras (24) au châssis (2) et par un quatrième palier de bras (25) au segment latéral (13),
- le quatrième bras de palier (25) étant décalé par rapport à l'axe de pivotement virtuel (A) passant par le palier de suspension (14) et le second palier de bras (22).

5. Equipement rapporté selon la revendication 4,
**caractérisé en ce que**
chacun des paliers de bras (21, 22, 24, 25) a plusieurs degrés de liberté.

6. Equipement rapporté selon l'une des revendications 4 ou 5, **caractérisé en ce que**
les bras de guidage (20, 23) font entre eux un angle compris entre 70° et 110° dans au moins l'une des positions.

7. Equipement rapporté selon l'une des revendications 4 à 6, **caractérisé en ce que**
le mouvement de pivotement à plusieurs dimensions se compose d'un premier mouvement de pivotement de l'axe de pivotement virtuel (A) ou autour du palier de suspension (14) et d'un second mouvement de pivotement du train de roulement (10) autour de l'axe de pivotement virtuel (A).

8. Equipement rapporté selon l'une des revendications précédentes, **caractérisé en ce que**
l'actionneur linéaire (26) agit entre le châssis (2) et le segment latéral (13) et il est conçu pour déplacer le train de roulement (10) entre la position de travail et la position de transport.

9. Equipement rapporté selon l'une des revendications 3 à 8, **caractérisé en ce que**
l'actionneur linéaire (26) est relié à un levier de renvoi (29) lui-même relié de manière pivotante au châssis (2) et par un bras de liaison (31) au segment latéral (13).

10. Equipement rapporté selon l'une des revendications précédentes, **caractérisé en ce que**
la pièce de suspension (11) comporte au moins deux roues de roulement (15).

11. Equipement rapporté selon l'une des revendications précédentes, **caractérisé en ce qu'**il comporte :
un élément de blocage (41) bloqué de manière réglable entre une position de blocage dans laquelle le train de roulement (10) est en position de transport et une position de libération dans laquelle il libère le déplacement du train de roulement (10) en position de travail.

12. Equipement rapporté selon la revendication 11,
**caractérisé en ce qu'**il comporte un timon (50) réglable entre une position de transport associée au mode de transport et une position de travail associée au mode de travail,
le mécanisme de couplage (40) agit entre le timon (10) et l'élément de blocage (41) pour tenir l'élément de blocage (41) dans la position de blocage lorsque le timon (10) est en position de transport et le mettre en position de libération lorsque le timon (10) est déplacé en position de travail.
